# EUROPÄISCHE PATENTANMELDUNG

(11) **EP 3 907 959 A1**
(43) Veröffentlichungstag der Anmeldung: **10.11.2021**
(21) Anmeldenummer: 20173472.0
(22) Anmeldetag: 07.05.2020
(51) Int. Cl.: H04L 29/06, G06F 16/27

(54) **GESCHÜTZTER DATENEXPORT AUS EINEM VERTEILTEN DATENBANKSYSTEM**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft eine Vorrichtung (100) und ein computerimplementiertes Verfahren zum kryptographischen geschützten Exportieren von Daten aus einem verteilten Datenbanksystem. Die Vorrichtung umfasst eine erste Schnittstelle (101), die derart eingerichtet ist, vom verteilten Datenbanksystem bereitgestellte Daten (D1) einzulesen, ein Schlüsselbereitstellungsmodul (102), das derart eingerichtet ist, mindestens einen kryptographischen Schlüssel (K) bereitzustellen, ein Kryptomodul (103), das derart eingerichtet ist, die Daten mittels des kryptographischen Schlüssels (K) kryptographisch geschützt bereitzustellen, und eine zweite Schnittstelle (104), die derart eingerichtet ist, die kryptographisch geschützten Daten (D2) für eine Nutzung außerhalb des verteilten Datenbanksystems zu exportieren.

## Beschreibung

Die Erfindung betrifft eine Vorrichtung und ein computerimplementiertes Verfahren zum kryptographisch geschützten Exportieren von Daten aus einem verteilten Datenbanksystem.

Eine verteilte Datenbank, insbesondere eine Blockkette (engl. Blockchain), kann für unterschiedliche Anwendungen verwendet werden. Dabei können von der verteilten Datenbank in der Regel lediglich die Daten bzw. Transaktionen ausgewertet werden, die innerhalb der verteilten Datenbank vorliegen, d.h. im Fall einer Blockkette lediglich die Transaktionen, die durch einen Block bestätigt sind. Eine Verknüpfung zwischen der verteilten Datenbank und einem externen Gerät kann insbesondere über sogenannte Blockketten-Orakel (engl. Blockchain Oracle) erfolgen, die Information aus der realen Welt in Form von Transaktionen für das verteilte Datenbanksystem verfügbar machen, so dass ein Smart Contract des verteilten Datenbanksystems diese Information nutzen kann.

Es ist eine Aufgabe der Erfindung, Informationen aus einem verteilten Datenbanksystem extern in gesicherter Form bereitzustellen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zum kryptographisch geschützten Exportieren von Daten aus einem verteilten Datenbanksystem, wobei die Vorrichtung mit dem verteilten Datenbanksystem koppelbar ist, umfassend:
- eine erste Schnittstelle, die derart eingerichtet ist, vom verteilten Datenbanksystem bereitgestellte Daten einzulesen,
- ein Schlüsselbereitstellungsmodul, das derart eingerichtet ist, mindestens einen kryptographischen Schlüssel bereitzustellen,
- ein Kryptomodul, das derart eingerichtet ist, die Daten mittels des kryptographischen Schlüssels kryptographisch geschützt bereitzustellen,
- eine zweite Schnittstelle, die derart eingerichtet ist, die kryptographisch geschützten Daten für eine Nutzung außerhalb des verteilten Datenbanksystems zu exportieren.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Auch kann unter einem Prozessor ein virtualisierter Prozessor, eine virtuelle Maschine oder eine Soft-CPU verstanden werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle, wie z. B. eine Datenbankschnittstelle, eine Netzwerkschnittstelle oder eine Schnittstelle zu einer Speichereinheit. Über eine solche Schnittstelle können beispielsweise beim Bereitstellen entsprechende Daten und/oder Informationen übermittelt und/oder gesendet und/oder abgerufen und/oder empfangen werden.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems, wie z. B. eine Blockkette oder eine Peer-to-Peer-Datenbank, verstanden werden, die insbesondere als Datenstruktur realisiert ist und vorzugsweise jeweils eine der Transaktionen oder mehrere der Transaktionen umfasst. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet). Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen.

Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird.

Unter "Exportieren aus einem verteilten Datenbanksystem" kann im Zusammenhand mit der Erfindung insbesondere das Bereitstellen von Daten verstanden werden, die im verteilten Datenbanksystem bestätigt vorliegen. In anderen Worten, es werden Daten extern bereitgestellt, integritätsgeschützt gespeichert sind.

Die Vorrichtung kann insbesondere in Software und/oder Hardware realisiert sein. Insbesondere kann die Vorrichtung mindestens einen Prozessor umfassen. Vorzugsweise kann die Vorrichtung an das verteilte Datenbanksystem gekoppelt werden, um ein geschütztes Exportieren von Daten aus dem verteilten Datenbanksystem zu ermöglichen. Die Vorrichtung ermöglicht somit insbesondere eine Anbindung an das verteilte Datenbanksystem, um Daten auf einfache Weise geschützt zu exportieren. Beispielsweise kann die Vorrichtung zwischen dem verteilten Datenbanksystem und einem Gerät, dass die exportierten Daten weiterverarbeiten kann, eingerichtet werden.

Die Daten liegen bestätigt, insbesondere kryptographisch bestätigt, im verteilten Datenbanksystem vor, d.h. beispielsweise in Form einer Transaktion, die durch einen Block einer Blockkette bestätigt ist.

Es ist ein Vorteil der Erfindung, dass Daten, die in einem verteilten Datenbanksystem gespeichert und als gültig bestätigt sind, außerhalb des verteilten Datenbanksystems in geschützter Form bereitgestellt werden können. So können die Daten unabhängig von dem verteilten Datenbanksystem verwendet und auf Gültigkeit geprüft werden. Der Export erfolgt insbesondere manipulationsgeschützt. Die Daten können beispielsweise mittels einer digitalen Signatur geschützt werden, um beispielsweise von einem Web-Dienst außerhalb des verteilten Datenbanksystems ausgewertet zu werden. Die Vorrichtung ermöglicht, Informationen aus dem verteilten Datenbanksystem extern einfach und verlässlich zu nutzen, insbesondere ohne auf das verteilte Datenbanksystem zugreifen zu müssen. Somit ist dies insbesondere für ressourcenbeschränkte Geräte, IoT-Geräte, und für Geräte oder Komponenten in separierten Netzwerken vorteilhaft.

In einer Ausführungsform der Vorrichtung kann das Kryptomodul eingerichtet sein, die Daten durch eine kryptographische Prüfsumme und/oder durch eine digitale Signatur und/oder durch einen Nachrichtenauthentisierungscode und/oder über einen authentisierten Kommunikationskanal kryptographisch geschützt bereitzustellen.

Damit kann eine Information, die in dem verteilten Datenbanksystem bestätigt vorliegt, manipulationsgeschützt exportiert werden.

In einer Ausführungsform kann die Vorrichtung ein Analysemodul umfassen, das derart eingerichtet ist, eine Gültigkeitsdauer für die kryptographisch geschützten Daten anhand zumindest eines Teils der Daten zu ermitteln und an die zweite Schnittstelle zum Exportieren der Gültigkeitsdauer zu übermitteln.

Dies ist insbesondere für eine externe Prüfung oder eine Offline-Prüfung der exportierten Daten vorteilhaft. Die Gültigkeitsdauer kann beispielsweise abhängig von einer Blocknummer eines entsprechenden bestätigten Blocks ermittelt werden. Dadurch kann beispielsweise verhindert werden, dass eine veraltete Blockchain-Information extern akzeptiert wird.

In einer Ausführungsform der Vorrichtung kann das Analysemodul derart eingerichtet sein, eine Zuverlässigkeitsinformation für die kryptographisch geschützten Daten anhand einer den Daten zugeordneten Strukturinformation des verteilten Datenbanksystems zu ermitteln und an die zweite Schnittstelle zum Exportieren der Zuverlässigkeitsinformation auszugeben.

Unter einer "Zuverlässigkeitsinformation" kann insbesondere eine Angabe oder ein Wahrscheinlichkeitswert über die Vertrauenswürdigkeit oder Richtigkeit der Daten verstanden werden. Die Zuverlässigkeitsinformation kann insbesondere abhängig von einer Länge einer Blockkette sein, die sich auf den Block der exportieren Daten bezieht. Beispielsweise können Daten einer Transaktion, die in einem Block bestätigt sind, erst dann als verlässlich gekennzeichnet werden, wenn die auf diesen Block folgenden Blöcke der (Teil-)Blockkette eine gewisse vordefinierte Mindestlänge aufweisen. Die Daten können somit eine Zuverlässigkeitsinformation aufweisen, die abhängig von der Strukturinformation des verteilten Datenbanksystems gebildet werden kann. Unter einer "Strukturinformation des verteilten Datenbanksystems" kann insbesondere eine Information über eine Anzahl von bestätigten Blöcken bzw. Transaktionen umfassen. Beispielsweise kann eine Strukturinformation angeben, wie viele Blöcke einer Blockchain bestätigt sein müssen. Damit kann beispielsweise erreicht werden, dass Daten erst dann extern bestätigt werden, d.h. kryptographisch geschützt bereitgestellt werden, wenn sich die entsprechende Anzahl an nachfolgenden Blöcken bestätigt sind.

In einer Ausführungsform kann die Vorrichtung ein Prüfmodul umfassen, das derart eingerichtet ist, Daten des verteilten Datenbanksystems anhand einer vorgegebenen Filterregel zu prüfen und das Prüfergebnis der ersten Schnittstelle zum Einlesen der Daten in Abhängigkeit des Prüfergebnisses bereitzustellen.

Eine Filterregel, im Weiteren auch als Filter bezeichnet, bezieht sich beispielsweise auf eine Eigenschaft derjenigen Daten bzw. Transaktionen, deren Information exportiert werden soll. Es kann folglich eine Suche nach Daten bzw. Transaktionen von bestätigten Blöcken durchgeführt werden, die ein Filterkriterium erfüllen.

In einer Ausführungsform kann die Filterregel eine Strukturinformation des verteilten Datenbanksystems betreffen.

Die Filterregel kann beispielsweise eine Strukturinformation bezogen auf denjenigen Block angeben, der die extern bereitgestellten Daten enthält oder bestätigt.

In einer Ausführungsform kann die Filterregel eine den Daten zugeordnete Strukturinformation mindestens eines weiteren, mit der Vorrichtung gekoppelten verteilten Datenbanksystems betreffen.

Beispielsweise kann die Filterregel so eingerichtet sein, dass eine Prüfung replizierter Information in mehr als einem verteilten Datenbanksystem auf Übereinstimmung erfolgt, d.h. die exportierten Daten werden dann extern kryptographisch geschützt bereitgestellt, wenn diese identisch oder konsistent in mehr als einem verteilten Datenbanksystem oder durch mehrere Knoten eines verteilten Datenbanksystems bestätigt sind. In einer Ausführungsform der Vorrichtung kann das Schlüsselbereitstellungsmodul derart eingerichtet sein, den kryptographischen Schlüssel in Abhängigkeit von zumindest einem Teil der Daten und/oder in Abhängigkeit von der vorgegebenen Filterregel zu generieren und/oder aus einer Menge von gespeicherten kryptographischen Schlüsseln in Abhängigkeit von zumindest einem Teil der Daten zu selektieren.

Die Vorrichtung kann somit insbesondere mehr als einen kryptographischen Schlüssel nutzen. Der jeweilige genutzte Schlüssel kann insbesondere von den exportierten Daten abhängen. Somit können insbesondere unterschiedlich kritische Informationen spezifisch für die jeweiligen Sicherheitsanforderungen geschützt werden.

In einer Ausführungsform kann das Schlüsselbereitstellungsmodul derart eingerichtet sein, lediglich einen Teil des kryptographischen Schlüssels bereitzustellen und die zweite Schnittstelle eingerichtet sein, die Daten lediglich dann bereitzustellen, wenn ein entsprechender restlicher Teil des kryptographischen Schlüssels oder der Daten, die mit einem restlichen Teil des kryptographischen Schlüssels geschützt sind, von einer mit dem verteilten Datenbanksystems gekoppelten Vorrichtung bereitgestellt wird.

Dies kann in Form eines Secret-Sharing-Verfahrens realisiert sein und hat den Vorteil, dass nur mehr als eine Instanz gemeinsam Daten gültig exportieren können. Eine einzelne Vorrichtung, insbesondere wenn diese manipuliert ist, kann in dieser Variante keine Daten kryptographisch geschützt exportieren. Mehrere Vorrichtungen, die jeweils über einen unterschiedlichen Teil des kryptographischen Schlüssels verfügen, können somit nur gemeinsam mit dem kryptographischen Schlüssel kryptographisch geschützte Daten bereitstellen.

In einer Ausführungsform der Vorrichtung kann die erste Schnittstelle derart eingerichtet sein, Daten in das verteilte Datenbanksystem einzufügen.

In einer Ausführungsform der Vorrichtung kann die erste Schnittstelle derart eingerichtet sein, einen bereitgestellten Sperrdatensatz, der den exportierten Daten zugeordnet ist, in das verteilte Datenbanksystem einzufügen, wobei der Sperrdatensatz eine Änderung der den exportierten Daten entsprechenden Daten im verteilten Datenbanksystem gemäß einer im Sperrdatensatz gespeicherten Sperrbedingung zumindest temporär sperrt.

Damit kann insbesondere erreicht werden, dass die Daten im verteilten Datenbanksystem, die den exportierten Daten entsprechen, innerhalb des verteilten Datenbanksystem nicht aktualisiert werden können. Vorzugsweise wird ein Sperrdatensatz von der Vorrichtung gebildet. Unter einem Sperrdatensatz kann auch eine Sperrtransaktion verstanden werden. Ein Sperrdatensatz referenziert vorzugsweise die Transaktion, die die exportierten Daten bestätigt, oder eine in einer Transaktion enthaltene Information. Die Sperrbedingung kann insbesondere ein Zeitintervall oder eine Angabe über eine Mindestblocknummer umfassen, so dass Daten in dem verteilten Datenbanksystem erst ab einem bestimmten Zeitpunkt wieder änderbar sind.

In einer Ausführungsform der Vorrichtung kann die erste Schnittstelle derart eingerichtet sein, einen bereitgestellten Entsperrdatensatz, der dem Sperrdatensatz zugeordnet ist, in das verteilte Datenbanksystem einzufügen, wobei der Entsperrdatensatz die Sperrung durch den Sperrdatensatz aufhebt.

Die Sperrbedingung des Sperrdatensatzes kann in dieser Variante beispielsweise keine Angabe umfassen, die einen Ablauf der Sperrung angibt. In diesem Fall können Änderungen an den Daten im verteilten Datenbanksystem durch einen Entsperrdatensatz wieder freigegeben werden.

In einer Ausführungsform der Vorrichtung kann das Prüfmodul derart eingerichtet sein, anhand der Daten des verteilten Datenbanksystems zu prüfen, ob ein den Daten zugeordneter Sperrdatensatz im verteilten Datenbanksystem vorliegt, und die zweite Schnittstelle kann derart eingerichtet sein, die kryptographischen Daten lediglich dann zu exportieren, falls kein den Daten zugeordneter Sperrdatensatz vorliegt.

Somit kann insbesondere zunächst geprüft werden, ob ein Sperrdatensatz im verteilten Datenbanksystem vorliegt, bevor die jeweiligen Daten exportiert werden.

In einer Ausführungsform der Vorrichtung kann das verteilte Datenbanksystem als eine Blockkette (engl. Blockchain) realisiert sein.

Gemäß einem weiteren Aspekt betrifft die Erfindung ein computerimplementiertes Verfahren zum kryptographisch geschützten Exportieren von Daten aus einem verteilten Datenbanksystem, mit den Schritten:
- Einlesen von vom verteilten Datenbanksystem bereitgestellten Daten,
- Bereitstellen eines kryptographischen Schlüssels,
- kryptographisch geschütztes Bereitstellen der Daten mittels des kryptographischen Schlüssels,
- Exportieren der kryptographisch geschützten Daten für eine Nutzung außerhalb des verteilten Datenbanksystems.

In einer Ausführungsform des Verfahrens können die Daten außerhalb des verteilten Datenbanksystems zum Steuern eines technischen Systems genutzt werden.

Ein technisches System kann beispielsweise ein Gerät, ein Feldgerät, eine Maschine, eine technische oder industrielle Anlage oder ähnliches sein. Die Vorrichtung erlaubt somit eine Nutzung von kryptographisch geschützten Daten, die durch das verteilte Datenbanksystem bestätigt sind, außerhalb des verteilten Datenbanksystems. Somit können die Daten verlässlich extern genutzt werden. Dies ist insbesondere für eine Steuerung eines sicherheitskritischen technischen Systems vorteilhaft.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der erfindungsgemäßen Vorrichtung und des erfindungsgemäßen computerimplementierten Verfahrens zum kryptographisch geschützten Datenexport aus einem verteilten Datenbanksystem sind in den Zeichnungen beispielhaft dargestellt und werden anhand der nachfolgenden Beschreibung näher erläutert. Es zeigen:
- Fig. 1:: ein Ausführungsbeispiels der erfindungsgemäßen Vorrichtung; und
- Fig. 2:: ein Ausführungsbeispiel des erfindungsgemäßen computerimplementierten Verfahrens.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

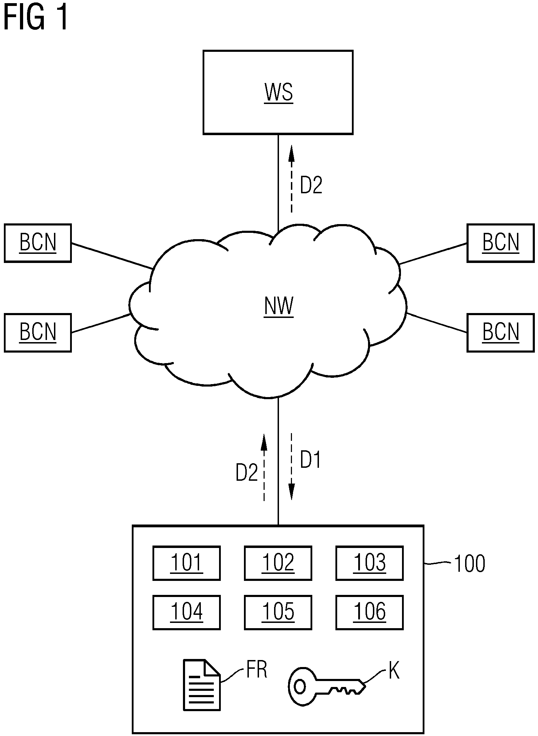

Figur 1 zeigt ein Ausführungsbeispiel der erfindungsgemäßen Vorrichtung zum kryptographisch geschützten Exportieren von Daten aus einem verteilten Datenbanksystem. Das verteilte Datenbanksystem kann insbesondere als Blockkette, engl. Blockchain, realisiert sein. Die Erfindung beschreibt einen manipulationsgeschützten Export von Information (Datensatz, Datenelement, Transaktion), die in einer Blockchain durch einen Block als gültig bestätigt ist. Dazu wird die Information für eine Nutzung außerhalb der Blockchain kryptographisch geschützt bereitgestellt, wie z.B. durch eine kryptographische Prüfsumme geschützt. Die derart bereitgestellte Information kann von Web-Diensten, IoT-Knoten und/oder offline ausgewertet werden. Diese Empfänger können die Information der Blockchain somit verlässlich nutzen, ohne auf die Blockchain selbst zuzugreifen.

Es ist ein Netzwerk NW gezeigt, über welches eine Blockchain realisiert ist. Es ist somit eine Blockchain-Infrastruktur gezeigt, die weitere mehrere Blockchain-Knoten BCN gezeigt. Die Vorrichtung 100 zum Exportieren von Daten, die in der Blockchain bestätigt vorliegen, ist mit dem Netzwerk NW verbunden. Somit ist die Vorrichtung 100 mit der Blockchain koppelbar. Somit ist die Vorrichtung 100 auch als ein Blockchain-Knoten zu verstehen und kann insbesondere als Export-Knoten oder Export-Orakel bezeichnet werden.

Weiter ist ein Webservice WS gezeigt, welcher Daten über das Netzwerk NW empfangen kann. Insbesondere ist der Webservice WS nicht Teil der Blockchain. Die Vorrichtung 100 ist derart eingerichtet, Daten aus der Blockchain zu exportieren und kryptographisch geschützt dem Webservice WS oder einem anderen Empfänger bereitzustellen.

Die Vorrichtung 100 umfasst eine erste Schnittstelle 101, ein Schlüsselbereitstellungsmodul 102, ein Kryptomodul 103 und eine zweite Schnittstelle 104. Die Vorrichtung 100 umfasst vorzugsweise außerdem ein Analysemodul 105 und/oder ein Prüfmodul 106. Die Module sind vorzugsweise alle miteinander gekoppelt.

Die erste Schnittstelle 101 ist derart eingerichtet, Daten, die in der Blockchain bestätigt vorliegen, einzulesen. Die Daten können dabei insbesondere durch das Prüfmodul 106 anhand mindestens einer vorgegebenen Filterregel FR geprüft werden. Die Daten werden abhängig vom Prüfergebnis bereitgestellt. Bei einem positiven Prüfergebnis, d.h. wenn die Daten die Kriterien der Filterregel FR erfüllen, werden die Daten extrahiert und bereitgestellt. Bei einem negativen Prüfergebnis, d.h. wenn die Daten mindestens ein Kriterium der Filterregel nicht erfüllen, werden die aus dem verteilten Datenbanksystem ausgelesenen Daten nicht bereitgestellt.

Die Filterregel FR (engl. Policy) kann insbesondere Informationen enthalten, welche Kriterien erfüllt sein müssen, damit die Daten durch die Vorrichtung 100 kryptographisch geschützt bereitgestellt werden. Die Filterregel FR kann beispielsweise die Blockchain-Struktur betreffen, so dass die Daten anhand einer Strukturinformation der Blockchain geprüft werden. Beispielsweise kann sich die Strukturinformation auf eine Mindestanzahl von Nachfolge-Blöcken in der Blockchain beziehen.

Außerdem kann die Filterregel FR eine zeitliche Gültigkeitsdauer der Daten betreffen. Dazu kann das Analysemodul 105 eingerichtet sein, die Gültigkeitsdauer anhand zumindest einem Teil der Daten zu ermitteln. Beispielsweise umfasst die Gültigkeitsdauer eine Information, wie lange die Daten extern genutzt werden. Dies kann beispielsweise in Abhängigkeit einer Bestätigungsinformation, z.B. einer Signatur des Blockchain-Blocks, der die Daten bestätigt, erfolgen.

Des Weiteren kann die Filterregel FR eine den Daten zugeordnete Strukturinformation mindestens eines weiteren, mit der Vorrichtung gekoppelten verteilten Datenbanksystems betreffen. So kann eine Prüfung replizierter Information in mehreren Blockchains auf Übereinstimmung durchgeführt werden. Somit wird, bevor eine Information extern als gültig bestätigt wird, geprüft, ob sie identisch oder konsistent in mehreren Blockchains bestätigt ist. Auch kann geprüft werden, ob eine Information durch mehrere Blockchain-Knoten BCN einer Blockchain identisch oder konsistent bestätigt ist.

Das Analysemodul 105 ist außerdem derart eingerichtet, eine Zuverlässigkeitsinformation für die Daten anhand einer den Daten zugeordneten Strukturinformation der Blockchain zu ermitteln. Bei einer Blockchain kann sich eine stabile, eindeutige Blockkette in der Regel erst mit einer gewissen Verzögerung ausbilden (Konsens-Algorithmus), da temporär mehrere konkurrierende Pfade vorliegen können. Die Information einer Blockchain-Transaktion, die in einem Block bestätigt ist, ist dadurch erst dann verlässlich, wenn die auf diesen Block folgenden Blöcke eine Teilkette einer gewissen Mindestlänge aufweisen, wie z.B. 6-8 weitere Blöcke. Dadurch kann es zu Verzögerungen kommen, bis eine in der Blockchain bestätigte Information tatsächlich verlässlich ist. Der Datensatz mit der exportierten Blockchain-Information kann daher eine Zuverlässigkeitsinformation aufweisen, die abhängig von der Blockchain-Strukturinformation gebildet wird. Somit können Daten zeitnah unter Vorbehalt extern bereitgestellt werden, d.h. schon bevor die Blockkette eine für eine hohe Verlässlichkeit erforderliche Struktur aufweist.

Das Schlüsselbereitstellungsmodul 102 ist derart eingerichtet, mindestens einen kryptographischen Schlüssel K bereitzustellen. Vorzugsweise wird der Schlüssel K in Abhängigkeit der eingelesenen Daten und/oder in Abhängigkeit der Filterregel FR generiert und derart bereitgestellt. Alternativ kann der Schlüssel K auch aus einer Menge von gespeicherten kryptographischen Schlüsseln in Abhängigkeit von zumindest einem Teil der Daten selektiert werden.

Das Schlüsselbereitstellungsmodul 102 kann außerdem derart eingerichtet sein, ein Secret-Sharing-Verfahren zu realisieren, wobei das Schlüsselbereitstellungsmodul lediglich einen Teil des kryptographischen Schlüssels K bereitstellt. Hierbei verfügen mehrere Instanzen der Vorrichtung 100 jeweils lediglich einen Teil des Schlüssels K, so dass Daten nur exportiert werden können, wenn mehrere oder alle Instanzen gemeinsam diese gültig signieren können.

Das Kryptomodul 103 ist derart eingerichtet, die eingelesenen Daten D1 mittels des kryptographischen Schlüssels K kryptographisch geschützt bereitzustellen. Beispielsweise können die Daten D1 durch eine kryptographische Prüfsumme und/oder durch eine digitale Signatur und/oder durch einen Nachrichtenauthentisierungscode und/oder über einen authentisierten Kommunikationskanal kryptographisch geschützt bereitgestellt werden. Somit werden die Daten D1 derart bereitgestellt, dass die Datenintegrität und/oder Vertraulichkeit auch außerhalb des verteilten Datenbanksystems gewährleistet ist und ein Empfänger dies überprüfen kann.

Außerdem ist es möglich, dass ausgelesene Daten des verteilten Datenbanksystems in verschlüsselter Form vorliegen. Das Kryptomodul 103 kann dann derart eingerichtet sein, die eingelesenen Daten D1 zu entschlüsseln und die entschlüsselten Daten mittels des kryptographischen Schlüssels K kryptographisch geschützt bereitzustellen.

Die zweite Schnittstelle 104 ist derart eingerichtet, die kryptographisch geschützten Daten vom Kryptomodul 103 zu empfangen und für eine Nutzung außerhalb der Blockchain zu exportieren. Zusätzlich können die ermittelte Gültigkeitsdauer und/oder eine Zuverlässigkeitsinformation der Daten exportiert werden.

Die exportierten Daten D2 können beispielsweise eine Referenz auf einen oder mehrere Blöcke und/oder Transaktionen der Blockchain umfassen, die die Grundlage für die bestätigten Daten darstellen. Damit kann beispielsweise geprüft werden, wie die exportierten Daten durch die Vorrichtung 100 ermittelt werden.

Die kryptographisch geschützten Daten D2 werden beispielsweise dem Web-Service WS über das Netzwerk NW übermittelt. Die kryptographisch geschützten Daten D2 können beispielsweise auch an ein Steuersystem eines sicherheitskritischen technischen Systems übermittelt und zur Steuerung des technischen Systems genutzt werden.

Empfangsseitig kann der kryptographische Schutz der übermitteln kryptographisch geschützten Daten D2 zunächst geprüft werden. Beispielsweise kann ein Empfänger, wie z.B. der Web-Service WS, eine entsprechende Prüfvorrichtung umfassen (nicht dargestellt), die derart eingerichtet ist, die exportierten Daten D2 zu empfangen und den kryptographischen Schutz der Daten zu prüfen. Die Daten können beispielsweise in verschlüsselter Form übermittelt werden, so dass die empfangsseitige Prüfung eine Entschlüsselung umfasst. Alternativ kann eine kryptographische Prüfsumme empfangsseitig geprüft und bestätigt werden. Vorzugsweise können die Daten empfangsseitig erst genutzt werden, wenn der kryptographische Schutz der Daten D2 als gültig bestätigt ist.

Außerdem kann die erste Schnittstelle 101 der Vorrichtung 100 auch derart eingerichtet sein, Daten in die Blockchain einzufügen. Insbesondere kann die erste Schnittstelle 101 einen bereitgestellten Sperrdatensatz, auch als Sperrtransaktion im Folgenden bezeichnet, einfügen. Vorzugsweise wird die Sperrtransaktion durch die Vorrichtung 100 selbst generiert. Die Sperrtransaktion verhindert, dass die exportierten Daten innerhalb der Blockchain durch eine nachfolgende Transaktion aktualisiert werden. Es wird somit eine Information in der Blockchain zumindest temporär für Änderungen gesperrt.

Eine Sperrtransaktion referenziert vorzugsweise die Transaktion, die die exportierte Information bestätigt, oder eine in einer Transaktion enthaltene Information. Die Sperrtransaktion kann dabei dauerhaft sein, sodass die exportierten Daten in der Blockchain durch eine nachfolgende Blockchain-Transaktion nicht aktualisierbar sind. Vorzugsweise erfolgt die Sperrung jedoch temporär. Dazu spezifiziert die Sperrtransaktion, dass die Daten nur durch eine Transaktion aktualisiert werden können, die in einem Block einer bestimmten Mindestblocknummer bestätigt ist. Somit können diese Daten ab einem bestimmten Zeitpunkt wieder änderbar/aktualisierbar sein. Somit wird eine weitere Transaktion, die sich auf die Transaktion, die exportiert ist, bezieht, erst dann bestätigt, wenn die Blockchain einen Block gebildet hat, der die geforderte Mindestblocknummer enthält. Um eine Manipulation der Sperrfunktion zu verhindern, kann die Transaktion ein Attribut enthalten, das spezifiziert, welcher Knoten eine Sperrtransaktion für diese Transaktion ausstellen können. Durch die zumindest temporäre Sperrung können die exportierten Daten für eine entsprechende Zeitspanne verlässlich genutzt werden. Nach Ablauf des Sperrzeitraums sind die Daten automatisch wieder änderbar.

Alternativ kann die Sperrtransaktion keinen Zeitpunkt angeben, ab dem wieder eine Änderung möglich ist, sondern die Daten werden durch eine der Sperrtransaktion zugeordnete Entsperrtransaktion wieder für Änderungen freigegeben werden. Ein solcher Entsperrdatensatz kann beispielsweise durch die erste Schnittstelle 101 in die Blockchain eingefügt werden. Die Sperrtransaktion bzw. Entsperrtransaktion können vorzugsweise von einem Smart Contract der Blockchain ausgewertet werden.

Ein Sperrdatensatz bzw. ein Entsperrdatensatz kann insbesondere mindestens einen (Ent-)Sperrbefehl und/oder mindestens eine (Ent-)Sperrbedingung aufweisen. Beispielsweise umfasst ein Sperrdatensatz einen Parameter "lock" (gesperrt), der einen Wert "true" (wahr) oder "false" (falsch) aufweisen kann. Entsprechend kann ein Entsperrdatensatz einen Parameter "unlock" (nicht gesperrt) aufweisen. Weiter umfasst der Sperrdatensatz vorzugsweise eine Information zur Sperrdauer. Der (Ent-)Sperrdatensatz kann insbesondere von einem Smart Contract der Blockchain ausgewertet werden. Es kann somit insbesondere anhand der Informationen im Sperrdatensatz geprüft werden, ob eine Sperrbedingung vorliegt. Abhängig vom Prüfergebnis kann dann eine zumindest temporäre Aktualisierung der Daten durch eine nachfolgende Transaktion verhindert werden.

Das Prüfmodul 106 kann außerdem derart eingerichtet sein, zu prüfen, ob ein Sperrdatensatz im verteilten Datenbanksystem vorliegt, bevor zugeordnete Daten exportiert werden. Die Daten werden insbesondere nicht durch die zweite Schnittstelle 104 exportiert, falls kein den Daten zugeordneter Sperrdatensatz vorliegt. Falls ein entsprechender Sperrdatensatz vorliegt, werden zumindest temporär keine Daten exportiert.

Das Prüfmodul 106 kann außerdem mindestens einen der Knoten des verteilten Datenbanksystems authentisieren, um damit eine Gültigkeit der Daten zu überprüfen. Es ist auch möglich, dass die Vorrichtung 100 Daten von mehreren Knoten der verteilten Datenbank abfragt oder von einem Knoten wiederholt abfragt und das Prüfmodul 106 die abgefragten Daten jeweils auf Übereinstimmung prüft. Vorzugsweise werden Daten lediglich bei einem positiven Prüfergebnis exportiert.

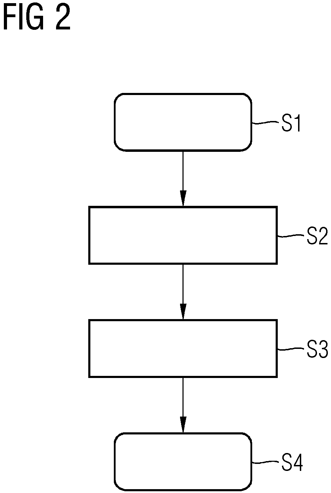

Figur 2 zeigt ein Ausführungsbeispiel des erfindungsgemäßen computerimplementierten Verfahrens zum kryptographisch geschützten Exportieren von Daten aus einem verteilten Datenbanksystem. Das Verfahren kann beispielsweise von einer Vorrichtung, wie in Figur 1 beschrieben, ausgeführt werden.

Im ersten Schritt S1 werden Daten, die vom verteilten Datenbanksystem bereitgestellt werden, eingelesen. Diese Daten sind insbesondere durch einen Block bestätigt, d.h. somit verlässlich. Diese Daten sollen kryptographisch geschützt für eine Nutzung durch ein technisches System, welches kein Knoten des verteilten Datenbanksystems ist, bereitgestellt werden.

Die Daten können insbesondere abhängig von einer vorgegebenen Filterregel eingelesen werden. Dabei wird beispielsweise geprüft, ob die Daten ein Filterkriterium erfüllen.

Dafür wird im nächsten Schritt S2 ein kryptographischer Schlüssel bereitgestellt. Der kryptographische Schlüssel wird beispielsweise abhängig von zumindest einem Teil der Daten und/oder abhängig von der Filterregel generiert.

Im nächsten Schritt S3 werden die Daten mittels des kryptographischen Schlüssels geschützt bereitgestellt. Die Daten können beispielsweise mit einer digitalen Signatur versehen werden.

Im nächsten Schritt S4 werden die kryptographisch geschützten Daten für eine Nutzung außerhalb des verteilten Datenbanksystems exportiert. Es ist beispielsweise auch möglich, dass die Daten über eine kryptographisch authentisierte Kommunikationsverbindung an einen Empfänger übermittelt werden. Der Empfänger kann beispielsweise eine Steuereinheit des technischen Systems sein, das die Daten zum Steuern des technischen Systems nutzt.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zum kryptographisch geschützten Exportieren von Daten aus einem verteilten Datenbanksystem, wobei die Vorrichtung mit dem verteilten Datenbanksystem koppelbar ist, umfassend:
- eine erste Schnittstelle (101), die derart eingerichtet ist, vom verteilten Datenbanksystem bereitgestellte Daten (D1) einzulesen,
- ein Schlüsselbereitstellungsmodul (102), das derart eingerichtet ist, mindestens einen kryptographischen Schlüssel (K) bereitzustellen,
- ein Kryptomodul (103), das derart eingerichtet ist, die Daten mittels des kryptographischen Schlüssels (K) kryptographisch geschützt bereitzustellen, und
- eine zweite Schnittstelle (104), die derart eingerichtet ist, die kryptographisch geschützten Daten (D2) für eine Nutzung außerhalb des verteilten Datenbanksystems zu exportieren.

2. Vorrichtung nach Anspruch 1, wobei das Kryptomodul (103) eingerichtet ist, die Daten durch eine kryptographische Prüfsumme und/oder durch eine digitale Signatur und/oder durch einen Nachrichtenauthentisierungscode und/oder über einen authentisierten Kommunikationskanal kryptographisch geschützt bereitzustellen.

3. Vorrichtung umfassend ein Analysemodul (105), das derart eingerichtet ist, eine Gültigkeitsdauer für die kryptographisch geschützten Daten anhand zumindest eines Teils der Daten zu ermitteln und an die zweite Schnittstelle zum Exportieren der Gültigkeitsdauer zu übermitteln.

4. Vorrichtung nach Anspruch 3, wobei das Analysemodul (105) derart eingerichtet ist, eine Zuverlässigkeitsinformation für die kryptographisch geschützten Daten anhand einer den Daten zugeordneten Strukturinformation des verteilten Datenbanksystems zu ermitteln und an die zweite Schnittstelle zum Exportieren der Zuverlässigkeitsinformation auszugeben.

5. Vorrichtung nach einem der vorhergehenden Ansprüche umfassend ein Prüfmodul (106), das derart eingerichtet ist, Daten des verteilten Datenbanksystems anhand einer vorgegebenen Filterregel (FR) zu prüfen und das Prüfergebnis der ersten Schnittstelle zum Einlesen der Daten in Abhängigkeit des Prüfergebnisses bereitzustellen.

6. Vorrichtung nach Anspruch 5, wobei die Filterregel (FR) eine Strukturinformation des verteilten Datenbanksystems betrifft.

7. Vorrichtung nach Anspruch 5 oder 6, wobei die Filterregel eine den Daten zugeordnete Strukturinformation mindestens eines weiteren, mit der Vorrichtung gekoppelten verteilten Datenbanksystems betrifft.

8. Vorrichtung nach einem der vorhergehenden Ansprüche, wobei das Schlüsselbereitstellungsmodul (102) derart eingerichtet ist, den kryptographischen Schlüssel in Abhängigkeit von zumindest einem Teil der Daten und/oder in Abhängigkeit von der vorgegebenen Filterregel zu generieren und/oder aus einer Menge von gespeicherten kryptographischen Schlüsseln in Abhängigkeit von zumindest einem Teil der Daten zu selektieren.

9. Vorrichtung nach einem der vorhergehenden Ansprüche, wobei das Schlüsselbereitstellungsmodul (102) derart eingerichtet ist, lediglich einen Teil des kryptographischen Schlüssels bereitzustellen und die zweite Schnittstelle eingerichtet ist, die Daten lediglich dann bereitzustellen, wenn ein entsprechender restlicher Teil des kryptographischen Schlüssels oder der Daten, die mit einem restlichen Teil des kryptographischen Schlüssels geschützt sind, von einer mit dem verteilten Datenbanksystems gekoppelten Vorrichtung bereitgestellt wird.

10. Vorrichtung nach einem der vorhergehenden Ansprüche, wobei die erste Schnittstelle (101) derart eingerichtet ist, Daten in das verteilte Datenbanksystem einzufügen.

11. Vorrichtung nach Anspruch 10, wobei die erste Schnittstelle (101) derart eingerichtet ist, einen bereitgestellten Sperrdatensatz, der den exportierten Daten zugeordnet ist, in das verteilte Datenbanksystem einzufügen, wobei der Sperrdatensatz eine Änderung der Daten, die den exportierten Daten entsprechen, im verteilten Datenbanksystem gemäß einer im Sperrdatensatz gespeicherten Sperrbedingung zumindest temporär sperrt.

12. Vorrichtung nach Anspruch 11, wobei die erste Schnittstelle (101) derart eingerichtet ist, einen bereitgestellten Entsperrdatensatz, der dem Sperrdatensatz zugeordnet ist, in das verteilte Datenbanksystem einzufügen, wobei der Entsperrdatensatz die Sperrung durch den Sperrdatensatz aufhebt.

13. Vorrichtung nach einem der vorhergehenden Ansprüche, wobei das Prüfmodul (106) derart eingerichtet ist, anhand der Daten des verteilten Datenbanksystems zu prüfen, ob ein den Daten zugeordneter Sperrdatensatz im verteilten Datenbanksystem vorliegt, und die zweite Schnittstelle derart eingerichtet ist, die kryptographischen Daten lediglich dann zu exportieren, falls kein den Daten zugeordneter Sperrdatensatz vorliegt.

14. Vorrichtung nach einem der vorhergehenden Ansprüche, wobei das verteilte Datenbanksystem als eine Blockkette realisiert ist.

15. Computerimplementiertes Verfahren zum kryptographisch geschützten Exportieren von Daten aus einem verteilten Datenbanksystem, mit den Schritten:
- Einlesen (S1) von vom verteilten Datenbanksystem bereitgestellten Daten,
- Bereitstellen (S2) eines kryptographischen Schlüssels,
- kryptographisch geschütztes Bereitstellen (S3) der Daten mittels des kryptographischen Schlüssels,
- Exportieren (S4) der kryptographisch geschützten Daten für eine Nutzung außerhalb des verteilten Datenbanksystems.

16. Computerimplementiertes Verfahren nach Anspruch 15, wobei die Daten außerhalb des verteilten Datenbanksystems zum Steuern eines technischen Systems genutzt werden.

17. Computerprogrammprodukt, das direkt in einen programmierbaren Computer ladbar ist, umfassend Programmcodeteile, die dazu geeignet sind, die Schritte des Verfahrens nach einem der Ansprüche 15 oder 16 durchzuführen.
